(19) Europäisches Patentamt / European Patent Office / Office européen des brevets

(11) EP 4 564 818 A1

(12) **EUROPEAN PATENT APPLICATION**
published in accordance with Art. 153(4) EPC

(43) Date of publication:
04.06.2025 Bulletin 2025/23

(51) International Patent Classification (IPC):
*H04N 19/44* (2014.01)

(21) Application number: 23915737.3

(86) International application number:
PCT/CN2023/135898

(22) Date of filing: 01.12.2023

(87) International publication number:
WO 2024/148979 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.01.2023 CN 202310074826

(71) Applicant: Tencent Technology (Shenzhen)
Company Limited
Shenzhen, Guangdong 518057 (CN)

(72) Inventors:
• FENG, Shenming
Shenzhen, Guangdong 518057 (CN)
• CHEN, Sihong
Shenzhen, Guangdong 518057 (CN)

(74) Representative: Nederlandsch Octrooibureau
P.O. Box 29720
2502 LS The Hague (NL)

(54) **VIDEO DECODING METHOD AND APPARATUS, AND ELECTRONIC DEVICE, COMPUTER-READABLE STORAGE MEDIUM AND COMPUTER PROGRAM PRODUCT**

(57) The embodiments of the present application are at least applied to the field of video content recognition and video decoding. Provided are a video decoding method and apparatus, and an electronic device, a computer-readable storage medium and a computer program product. The method comprises: performing video stream analysis on a video to be decoded, so as to obtain a frame data packet of each video frame in said video (S101), wherein the video stream analysis refers to parsing an encapsulated data packet of encapsulated video frame information in said video; on the basis of frame attribute information in the frame data packet, determining the frame type of each video frame (S102), wherein the frame type comprises a key frame and a non-key frame; on the basis of the number of key frames, determining a plurality of target sampling frames from said video (S103), wherein the target sampling frames are video frames used for providing rendering data when said video is rendered, and the rendering data is stored in frame caches respectively corresponding to the target sampling frames; acquiring corresponding rendering data from the frame cache of each target sampling frame (S104); and on the basis of the rendering data, performing video decoding on said video, so as to obtain a decoded video corresponding to said video (S105).

FIG. 6

**Description**

RELATED APPLICATION

This application is based on Chinese Patent Application No. 202310074826.1, filed on January 12, 2023, and claims priority to this Chinese Patent Application.

FIELD OF THE TECHNOLOGY

Embodiments of the present disclosure relate to the Internet field, and relate to but are not limited to a video decoding method and device, an electronic device, a computer-readable storage medium, and a computer program product.

BACKGROUND OF THE DISCLOSURE

Video decoding can be divided into two operations: In the first operation, a frame buffer of each video frame is decoded from a video stream; and in the second operation, the frame buffer is rendered as a complete image. In the first operation, decoding of different video frames depends on different associated frames. For example, in a related art, for an inputted to-be-decoded video, each video frame is first decoded from a video stream to obtain a corresponding frame buffer, and the frame buffer is stored in a cache. Then, a time stamp index of a required video frame is calculated by using a uniform frame capture algorithm, and a corresponding frame buffer is selected for picture rendering according to the time stamp index.

However, in a video decoding method in a related art, the concept of a group of pictures (GOP) is not considered in a decoding process, and the "same" method is used for all video frames. Therefore, in a frame buffer decoding process, all video frames may decoded, resulting in a slow decoding speed. In addition, importance of a key frame is not considered, and a useful frame may be missed easily. For example, a short video frame whose picture changes greatly is missed and not decoded. It can be learned that problems of low decoding efficiency and decoding accuracy exist in the video decoding method in the related art.

SUMMARY

Embodiments of the present disclosure provide a video decoding method and device, an electronic device, a computer-readable storage medium, and a computer program product, which can be applied at least to video content recognition and video decoding fields and can improve video decoding efficiency and accuracy.

Technical solutions in the embodiments of the present disclosure are implemented as follows:

An embodiment of the present disclosure provides a video decoding method, performed by an electronic device and including: performing video stream analysis on a to-be-decoded video to obtain a frame data packet of each video frame in the to-be-decoded video; the video stream analysis referring to parsing an encapsulated data packet in which video frame information of the to-be-decoded video is encapsulated; determining a frame type of each video frame based on frame attribute information in the frame data packet; the frame type including one of a key frame and a non-key frame; determining multiple target sampling frames from the to-be-decoded video based on a quantity of key frames, the target sampling frames being video frames configured for providing rendering data when rendering the to-be-decoded video, and the rendering data being stored in frame buffers respectively corresponding to the target sampling frames; obtaining corresponding rendering data from a frame buffer of each of the target sampling frames; and performing video decoding on the to-be-decoded video based on the rendering data to obtain a decoded video corresponding to the to-be-decoded video.

An embodiment of the present disclosure provides a video decoding device, where the device includes: a video stream analysis module, configured to perform video stream analysis on a to-be-decoded video to obtain a frame data packet of each video frame in the to-be-decoded video; the video stream analysis referring to parsing an encapsulated data packet in which video frame information of the to-be-decoded video is encapsulated; a first determining module, configured to determine a frame type of each video frame based on frame attribute information in the frame data packet; the frame type including one of a key frame and a non-key frame; a second determining module, configured to: determine multiple target sampling frames from the to-be-decoded video based on a quantity of key frames, the target sampling frames being video frames configured for providing rendering data when rendering the to-be-decoded video, and the rendering data being stored in frame buffers respectively corresponding to the target sampling frames; an obtaining module, configured to obtain corresponding rendering data from a frame buffer of each of the target sampling frames; and a video decoding module, configured to perform video decoding on the to-be-decoded video based on the rendering data to obtain a decoded video corresponding to the to-be-decoded video.

An embodiment of the present disclosure provides an electronic device, including: a memory, configured to store executable instructions; and a processor, configured to implement the foregoing video decoding method when executing the executable instructions stored in the memory.

An embodiment of the present disclosure provides a computer program product or a computer program, where the computer program product or the computer program includes executable instructions, and the executable instructions are stored in a computer-readable storage medium. When a processor of an electronic device reads the executable instructions from the computer-readable storage medium and executes the executable instructions, the foregoing video decoding method is implemented.

An embodiment of the present disclosure provides a computer-readable storage medium, having executable instructions stored thereon, and configured to cause a processor to implement the foregoing video decoding method when executing the executable instructions.

The embodiments of the present disclosure have the following beneficial effects: A frame type of each video frame is determined based on frame attribute information in a frame data packet of each video frame in a to-be-decoded video. The frame type includes one of a key frame and a non-key frame. Then, multiple target sampling frames are determined from the to-be-decoded video based on a quantity of key frames. Corresponding rendering data is obtained from a frame buffer of each of the target sampling frames. Video decoding is performed on the to-be-decoded video based on the rendering data to obtain a decoded video corresponding to the to-be-decoded video. In this way, on one hand, multiple target sampling frames are selected from all video frames. The target sampling frames are selected based on a quantity of key frames. Therefore, key frames may be preferentially extracted, and some non-key frames are removed from all the video frames, so that similar redundant frames can be reduced, and a video decoding process can be accelerated. On the other hand, video decoding is performed based on all key frames or based on all key frames and some non-key frames, and the key frame is generally a frame in which a picture changes greatly or a key action in a motion change of a role or an object is located, to be specific, the key frame is equivalent to a key drawing in a two-dimensional animation. Therefore, when video decoding is performed on a to-be-decoded video based on rendering data stored in frame buffers of a large quantity of key frames, video decoding accuracy can be greatly improved.

BRIEF DESCRIPTION OF THE DRAWINGS

FIG. 1 is a schematic diagram of a frame decoding sequence in a related art.
FIG. 2 is a schematic flowchart of a video decoding method in a related art.
FIG. 3 is a diagram of a decoding comparison effect between an embodiment of the present disclosure and a method in a related art.
FIG. 4 is an optional schematic architectural diagram of a video decoding system according to an embodiment of the present disclosure.
FIG. 5 is a schematic structural diagram of an electronic device according to an embodiment of the present disclosure.

FIG. 6 is an optional schematic flowchart of a video decoding method according to an embodiment of the present disclosure.
FIG. 7 is another optional schematic flowchart of a video decoding method according to an embodiment of the present disclosure.
FIG. 8 is a schematic diagram of an implementation process of determining a target sampling frame according to an embodiment of the present disclosure.
FIG. 9 is a schematic diagram of an implementation process of determining target sampling frames that all come from key frames according to an embodiment of the present disclosure.
FIG. 10 is a schematic diagram of an implementation process of determining target sampling frames from all key frames and some non-key frames according to an embodiment of the present disclosure.
FIG. 11 is a schematic diagram of an implementation process of video decoding according to an embodiment of the present disclosure.
FIG. 12 is a schematic diagram of an application process of a video decoding method according to an embodiment of the present disclosure.
FIG. 13 is a decoding plus frame sampling process of a frame buffer according to an embodiment of the present disclosure.
FIG. 14 is a schematic diagram of an application process of a video decoding method according to an embodiment of the present disclosure.

DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation to the present disclosure. All other embodiments obtained by a person of ordinary skill in the art without creative efforts shall fall within the protection scope of the present disclosure.

In the following description, the term "some embodiments" describes subsets of all possible embodiments, but "some embodiments" may be the same subset or different subsets of all the possible embodiments, and can be concatenated with each other without conflict. Unless otherwise defined, meanings of all technical and scientific terms used in embodiments of the present disclosure are the same as those usually understood by a person skilled in the art to which embodiments of the present disclosure belongs. Terms used in embodiments of the present disclosure are merely intended to describe objectives of embodiments of the present disclosure, but are not intended to limit the present disclosure.

Before a video decoding method in embodiments of the present disclosure is explained, a video decoding process in a related art is first described.

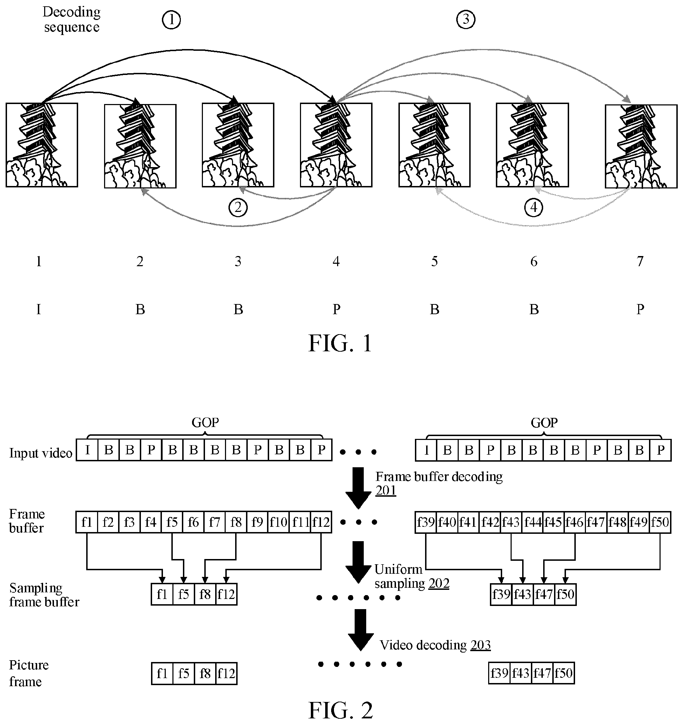

In a related art, a video decoding process is implemented by using a uniform frame capture algorithm, which may be divided into two operations: In the first operation, rendering data stored in a frame buffer of each video frame is decoded from a video stream. In the second operation, the rendering data stored in the frame buffer is rendered as a complete image. In the first operation, decoding of different video frames depends on different associated frames. As shown in FIG. 1, FIG. 1 is a schematic diagram of a frame decoding sequence in a related art. It may be learned that a fourth frame (P frame) can be decoded only after decoding of a first key frame (I frame) is completed. Because a second frame and a third frame are bi-directionally predicted code frames (B frames), decoding can be performed only after decoding of the first frame and the fourth frame in front of the B frames are completed. Therefore, a decoding sequence in video decoding may be different from a picture sequence of video playback. When the rendering data in the frame buffer is decoded, information about each video frame, such as a time stamp and a size, needs to be further obtained.

FIG. 2 is a schematic flowchart of a video decoding method in a related art. As shown in FIG. 2, for an input video (including multiple video frames, for example, an I frame, a P frame, and a B frame in FIG. 2), frame buffer decoding 201 is first performed on each video frame from a video stream to obtain rendering data in a corresponding frame buffer, and the rendering data is stored in a cache. Then, a time stamp index of a required video frame is calculated by uniform sampling 202, and rendering data in a corresponding frame buffer is extracted according to the time stamp index to perform video decoding 203.

The concept of GOP is not considered in the decoding process of the uniform frame capture algorithm in the related art. The "same" method is used for all video frames, and the following flaws exist in the process: First, in the decoding process of the rendering data in the frame buffer, all the video frames need to be decoded, resulting in a slow decoding speed. Second, because importance of a key frame is not considered, a useful frame is easily missed, for example, a short video frame whose picture changes greatly. In addition, because redundancy between non-key frames is ignored, video frame pictures captured in a long segment of video (for example, duration of a video segment is greater than a preset duration threshold) are prone to be similar.

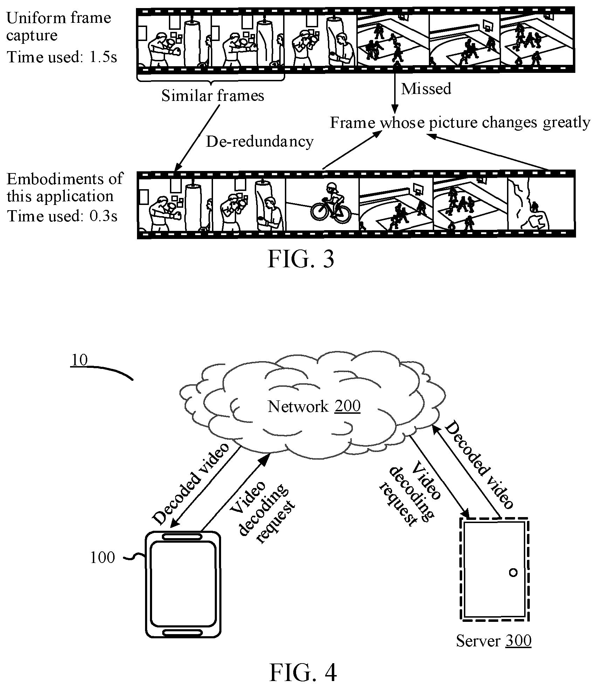

Based on the foregoing at least one problem in the related art, an embodiment of the present disclosure provides a video decoding method, so as to ensure that a video frame whose picture changes greatly (to be specific, a video similarity between two adjacent video frames is less than a similarity threshold) is decoded as much as possible by preferentially capturing a key frame, thereby reducing missing of a key frame in a to-be-decoded video. In addition, a B frame in the to-be-decoded video is removed to reduce inter-frame redundancy and accelerate the decoding process. As shown in FIG. 3, FIG. 3 is a diagram of a decoding comparison effect between an embodiment of the present disclosure and a method in a related art. According to the video decoding method in this embodiment of the present disclosure, it can be ensured that a video frame whose picture changes greatly is decoded as much as possible, thereby reducing missing of a key frame, improving accuracy of video frame capturing, and further improving video decoding accuracy.

In the video decoding method provided in this embodiment of the present disclosure, first, video stream analysis is performed on a to-be-decoded video to obtain a frame data packet of each video frame in the to-be-decoded video; the video stream analysis referring to parsing an encapsulated data packet in which video frame information of the to-be-decoded video is encapsulated; then determining a frame type of each video frame based on frame attribute information in the frame data packet; the frame type including one of a key frame and a non-key frame; determining multiple target sampling frames from the to-be-decoded video based on a quantity of key frames; the target sampling frames being video frames configured for providing rendering data when rendering the to-be-decoded video, and the rendering data being stored in frame buffers respectively corresponding to the target sampling frames; finally obtaining corresponding rendering data from a frame buffer of each of the target sampling frames; and performing video decoding on the to-be-decoded video based on the rendering data to obtain a decoded video corresponding to the to-be-decoded video. In this way, multiple target sampling frames are selected from all video frames. The target sampling frames are selected based on a quantity of key frames. Therefore, key frames may be preferentially extracted, and some non-key frames are removed from all the video frames, so that similar redundant frames can be reduced, and a video decoding process can be accelerated. In addition, video decoding is performed based on all key frames or based on all key frames and some non-key frames, and the key frame is generally a frame in which a picture changes greatly or a key action in a motion change of a role or an object is located, to be specific, the key frame is equivalent to a key drawing in a two-dimensional animation. Therefore, when video decoding is performed on a to-be-decoded video based on rendering data stored in frame buffers of a large quantity of key frames, video decoding accuracy can be greatly improved.

Herein, an exemplary application of a video decoding device in an embodiment of the present disclosure is first described, and the video decoding device is an electronic device configured to implement a video decoding method. In an implementation, the video decoding device (for example, the electronic device) provided in this embodiment of the present disclosure may be implemented as a terminal, or may be implemented as a server. In an implementation, the video decoding device provided in this embodiment of the present disclosure may be implemented as any terminal that has a video data processing function, such as a notebook computer, a tablet computer, a desktop computer, a mobile phone, a portable music player, a personal digital assistant, a dedicated message device, a portable game device, an intelligent robot, an intelligent household electrical appliance, and an intelligent in-vehicle device. In another implementation, the video decoding device provided in this embodiment of the present disclosure may be further implemented as a server. The server may be an independent physical server, or may be a server cluster or a distributed system formed by multiple physical servers, or may be a cloud server that provides basic cloud computing service such as a cloud service, a cloud database, cloud computing, a cloud function, cloud storage, a network service, cloud communication, a middleware service, a domain name service, a security service, a content distribution network (CDN), big data, and an artificial intelligence platform. The terminal and the server may be directly or indirectly connected in a wired or wireless communication manner, which is not limited in embodiments of the present disclosure. The following describes an exemplary application when the video decoding device is implemented as a server.

Referring to FIG. 4, FIG. 4 is an optional schematic architectural diagram of a video decoding system according to an embodiment of the present disclosure. In this embodiment of the present disclosure, an example in which a video decoding method is applied to any video application is used for description. In a video application, a video recognition function is provided, and the video recognition function may be implemented after video decoding is performed on a to-be-decoded video inputted by a user, to obtain a video recognition result, so as to perform a subsequent processing operation based on the video recognition result. In this embodiment of the present disclosure, the video decoding system includes at least a terminal 100, a network 200, and a server 300. The server 300 may be a server of the video application. The server 300 may constitute the video decoding device in this embodiment of the present disclosure. The terminal 100 is connected to the server 300 by using the network 200. The network 200 may be a wide area network, a local area network, or a combination thereof.

In this embodiment of the present disclosure, when performing video decoding, the terminal 100 receives the to-be-decoded video of the user by using a client of the video application. The to-be-decoded video is encapsulated into a video decoding request, and the terminal 100 sends the video decoding request to the server 300 by using the network 200. After receiving the video decoding request, the server 300 performs video stream analysis on the to-be-decoded video in response to the video decoding request, to obtain a frame data packet of each video frame in the to-be-decoded video. The video stream analysis herein refers to parsing an encapsulated data packet in which video frame information of the to-be-decoded video is encapsulated. Then, a frame type of each video frame is determined based on frame attribute information in the frame data packet. The frame type includes one of a key frame and a non-key frame. Then, multiple target sampling frames are determined from the to-be-decoded video based on a quantity of key frames. The target sampling frames are video frames configured for providing rendering data when rendering the to-be-decoded video, and the rendering data is stored in frame buffers respectively corresponding to the target sampling frames. Finally, corresponding rendering data is obtained from a frame buffer of each of the target sampling frames. Video decoding is performed on the to-be-decoded video based on the rendering data, to obtain a decoded video corresponding to the to-be-decoded video. After obtaining the decoded video, the server 300 may send the decoded video to the terminal 100, so as to display the decoded video on a current interface of the terminal 100.

In some other embodiments, after obtaining the decoded video, the server 300 may further perform video recognition on the decoded video to obtain a video recognition result, and send the video recognition result to the terminal 100, so as to perform a subsequent operation on the terminal 100 based on the video recognition result. A specific application scenario of the decoded video is described below by using an example.

In still some embodiments, the video decoding device may alternatively be implemented as a terminal, to be specific, the terminal 100 is used as an execution body to implement the video decoding method in the embodiment of the present disclosure. In an implementation process, the terminal 100 collects a to-be-decoded video by using the client of the video application. In addition, the terminal 100 performs video stream analysis on the to-be-decoded video to obtain a frame data packet of each video frame in the to-be-decoded video. Then, the terminal 100 determines a frame type of each video frame based on the frame attribute information in the frame data packet. The frame type includes one of a key frame and a non-key frame. Then, the terminal 100 determines multiple target sampling frames from the to-be-decoded video based on a quantity of key frames. Finally, the terminal 100 obtains corresponding rendering data from a frame buffer of each of the target sampling frames; and performs video decoding on the to-be-decoded video based on the rendering data to obtain a decoded video corresponding to the to-be-decoded video.

The video decoding method provided in the embodiment of the present disclosure may alternatively be implemented based on a cloud platform and by using a cloud technology. For example, the server 300 may be a cloud server. Video stream analysis is performed on a to-be-decoded video by using the cloud server, or a frame type of each video frame is determined by using the cloud server, or a target sampling frame is determined from the to-be-decoded video by using the cloud server, or video decoding is performed on the to-be-decoded video by using the cloud server.

In some embodiments, there may be further a cloud memory, and information such as a to-be-decoded video, a frame type of each video frame, and rendering data in a frame buffer of each video frame may be stored in the cloud memory, or a decoded video may be stored in the cloud memory. In this way, when video recognition is performed on the to-be-decoded video, the decoded video may be obtained from the cloud memory, and video recognition is performed based on the decoded video, thereby improving video recognition efficiency.

The cloud technology is a hosting technology that unifies a series of resources, such as hardware, software, and a network, in a wide region network or a local region network, to implement computing, storage, processing, and sharing of data. A cloud technology is a general term of a network technology, an information technology, an integration technology, a management platform technology, and an application technology that are applied based on a cloud computing business model. The cloud technology may form a resource pool and be used as required, and is flexible and convenient. The cloud computing technology will become an important support. A background service of a technology network system requires a large amount of computing and storage resources, such as a video website, a picture website, and more portals. With rapid development and application of the Internet industry, each item may have its own identification mark in the future. The identification mark needs to be transmitted to a background system for logical processing. Data at different levels will be processed separately. All types of industry data need to be supported by a powerful system, which may be implemented through cloud computing.

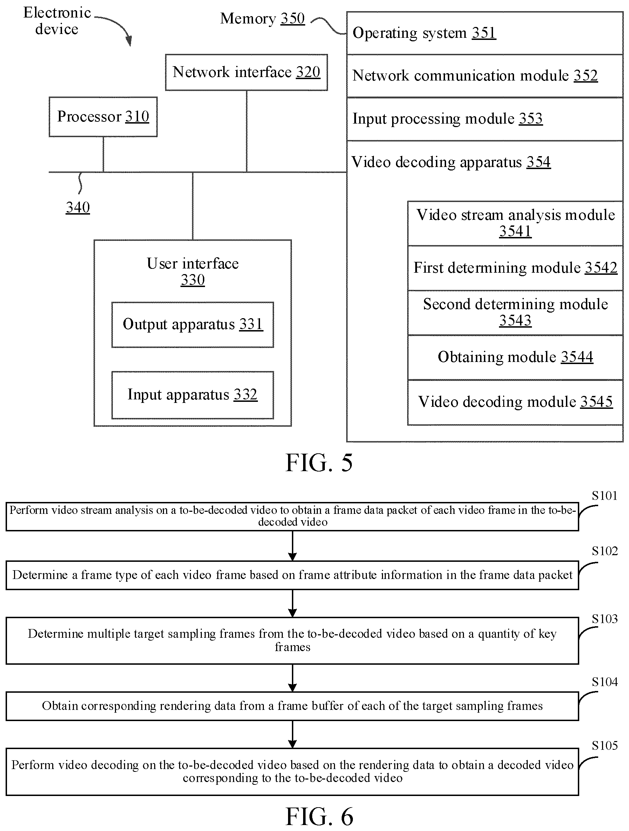

FIG. 5 is a schematic structural diagram of an electronic device according to an embodiment of the present disclosure. The electronic device shown in FIG. 5 may be a video decoding device, and the video decoding device includes: at least one processor 310, a memory 350, at least one network interface 320, and a user interface 330. Components in the video decoding device are coupled together by using a bus system 340. The bus system 340 is configured to implement connection and communication between the components. In addition to a data bus, the bus system 340 further includes a power bus, a control bus, and a status signal bus. However, for clear description, all types of buses in FIG. 5 are marked as the bus system 340.

The processor 310 may be an integrated circuit chip, and has a signal processing capability, for example, a general-purpose processor, a digital signal processor (DSP), another programmable logic device, a discrete gate or transistor logic device, or a discrete hardware component. The general-purpose processor may be a microprocessor or any conventional processor.

The user interface 330 includes one or more output devices 331 that can present media content, and one or more input devices 332.

The memory 350 may be removable, non-removable, or a combination thereof. An exemplary hardware device includes a solid-state memory, a hard disk drive, an optical disk drive, and the like. In some embodiments, the memory 350 includes one or more storage devices physically located away from the processor 310. The memory 350 includes a volatile memory or a non-volatile memory, or may include both a volatile memory and a non-volatile memory. The non-volatile memory may be a read-only memory (ROM), and the volatile memory may be a random access memory (RAM). The memory 350 described in this embodiment of the present disclosure is intended to include any suitable type of memory. In some embodiments, the memory 350 can store data to support various operations, and examples of the data include programs, modules, and data structures, or subsets or supersets thereof, as illustrated below.

An operating system 351 includes system programs used for processing various basic system services and executing hardware-related tasks, such as a framework layer, a kernel library layer, and a driver layer, and is used for implementing various basic services and processing hardware-based tasks. A network communication module 352 is configured to reach another computing device through one or more (wired or wireless) network interfaces 320. An example of the network interface 320 includes: Bluetooth, wireless compatibility authentication (Wi-Fi), universal serial bus (USB), and the like. An input processing module 353 is configured to detect one or more user inputs or interactions from one of one or more input devices 332 and translate a detected input or interaction.

In some embodiments, the device provided in this embodiment of the present disclosure may be implemented in a software manner. FIG. 5 shows a video decoding device 354 stored in a memory 350. The video decoding device 354 may be a video decoding device in an electronic device, and may be software in a form of a program, a plug-in, or the like, and includes the following software modules: a video stream analysis module 3541, a first determining module 3542, a second determining module 3543, an obtaining module 3544, and a video decoding module 3545. These modules are logical modules. Therefore, any combination or further division may be performed according to an implemented function. Functions of the modules are described below.

In some other embodiments, the device provided in this embodiment of the present disclosure may be implemented in a hardware manner. As an example, the device provided in this embodiment of the present disclosure may be a processor in the form of a hardware decoding processor. The processor is programmed to perform the video decoding method provided in embodiments of the present disclosure. For example, the processor in the form of a hardware decoding processor may use one or more application-specific integrated circuits (ASIC), DSPs, programmable logic devices (PLD), complex programmable logic devices (CPLD), field-programmable gate arrays (FPGA), or other electronic elements.

The video decoding method provided in the embodiments of the present disclosure may be performed by an electronic device. The electronic device may be a server or a terminal. To be specific, the video decoding method in the embodiments of the present disclosure may be performed by a server, may be performed by a terminal, or may be performed through interaction between the server and the terminal.

FIG. 6 is an optional schematic flowchart of a video decoding method according to an embodiment of the present disclosure. The following describes the video decoding method with reference to operations shown in FIG. 6. The video decoding method in FIG. 6 is described by using an example in which a server is used as an execution body. As shown in FIG. 6, the method includes the following operations S101 to S105:

Operation S101: Perform video stream analysis on a to-be-decoded video to obtain a frame data packet of each video frame in the to-be-decoded video.

Herein, the to-be-decoded video may be a video played by a user on a video application, a video downloaded by the user by using a video application, or a video shot by the user. The video decoding method in this embodiment of the present disclosure may be applied to video recognition, to be specific, a decoded video may be obtained after decoding is performed on the to-be-decoded video, so as to recognize information such as video content and a video type based on the decoded video. In the present disclosure scenario, the to-be-decoded video may alternatively be a to-be-recognized video. The user may request to recognize the to-be-recognized video by using a video application. Before the to-be-recognized video is recognized, the to-be-recognized video is first used as a to-be-decoded video, and the video decoding method provided in this embodiment of the present disclosure is used to perform video decoding.

Video stream analysis is to parse an encapsulated data packet in which video frame information of the to-be-decoded video is encapsulated, so as to obtain a frame data package of each video frame in the to-be-decoded video. Herein, the to-be-decoded video is considered as being parsed in a form of a video stream. The video stream of the to-be-decoded video mentioned in this embodiment of the present disclosure is stream data compressed by using a compression algorithm, or may be referred to as a coded stream. For example, when a compression/coding algorithm of H264 is configured for encoding the video, the video stream of the to-be-decoded video may be referred to as a H264 code stream.

In this embodiment of the present disclosure, for the to-be-decoded video, video frame information of each video frame in the to-be-decoded video may be encapsulated into a respective frame data packet in advance. To facilitate understanding of subsequent content, the video frame is described herein. A video frame is a basic element of a video stream. For video coding/compression, the core is to store a group of consecutive frame data in time by using as little space as possible. Video decoding is to restore a group of coded/compressed frame data as much as possible. A coding/compression algorithm that can be restored by 100% is referred to as lossless compression, and on the contrary, is referred to lossy compression (although lossless compression is ideal, lossy compression often has to be selected in many practical scenarios to pursue a high compression rate, for example, to reduce network bandwidth pressure). It can be learned that the video frame (or may be referred to as a frame for short) is the core of the video stream media field. The video frame may be understood as a frame of image that is normally seen. Differently, the image is generally in an RGB format, and the video frame is generally in a YUV format. Video frame information refers to data of a corresponding video frame in a YUV format. An image that can be presented by the video frame is obtained by decoding the video frame information of the video frame. To be specific, the video frame information provides all information configured for decoding and rendering a corresponding video frame image.

A frame data packet includes not only content required for decoding the video frame, but also information such as a frame type of the video frame. To be specific, video frame information of each video frame includes not only data in the foregoing YUV format, but also information such as a frame type of the video frame. The frame type may be stored in the frame data packet in a form of frame attribute information. All video frames of a to-be-decoded video may include the following frame types: a key frame and a non-key frame. A frame data packet of the key frame includes complete information of this frame of picture, namely, includes all content of the present frame of data. This frame of picture is completely reserved in the frame data packet of the key frame. Therefore, only the present frame of picture is required to complete decoding (because a complete picture is included). A frame data packet of the non-key frame includes difference information between this frame of picture and a video frame before the present frame or between this frame of picture and video frames before and after the present frame. To be specific, for the non-key frame, the difference information defined in the present frame needs to be superposed on a previously buffered picture during decoding, so that a final picture can be generated.

Operation S102: Determine a frame type of each video frame based on frame attribute information in the frame data packet.

Herein, the frame type includes one of a key frame and a non-key frame.

The key frame is an image frame in which all content of this frame of picture (namely, the present frame of picture) is reserved (in which the present frame of picture is obtained by performing image rendering on rendering data of the present frame), and a final picture can be generated by coding data of the present frame without reference to another image frame. The to-be-decoded video may include one or more or all of three code frames: An intra-coded image frame (I frame, Intra-coded Frame), a predictive-coded image frame (P frame, Predictive-coded Frame), and a bi-directionally predicted code image frame (B frame, Bi-directionally Predicted Frame). The key frame may be an I frame, and the I frame completely reserves all content of the present frame of picture. Therefore, during coding of the I frame, another image frame of the to-be-encoded video may be not referenced, and only information about the I frame itself is used for coding. During decoding of the I frame, decoding can be completed only by using coded present frame of data. For the to-be-decoded video, one GOP is one group of consecutive pictures, and one video includes multiple GOPs. The key frame may be a key frame in the GOP, and is a complete picture. Generally, when a picture changes greatly, an I frame needs to be re-coded. In the computer animation field, the key frame may include a frame in which a key action in a motion change of a role or an object is located, which is equivalent to a key drawing in a two-dimensional animation. An animation between key frames may be created and added by software, and may be referred to as a transition frame or an intermediate frame. The frame herein is a single image picture of a smallest unit in an animation, and is equivalent to each frame on a strip of film in a movie. On a time axis of animation software, a frame is represented as a grid or a mark. Both the frame and the video frame in this embodiment of the present disclosure represent a single image picture of a smallest unit in the to-be-decoded video.

The non-key frame is an image frame in which difference data (namely, rendering data that is differentiated from that of a previous image frame, not including same rendering data) between this image frame and a previous image frame in an image frame sequence (namely, a video frame sequence formed by multiple video frames of the to-be-decoded video) is stored, or is an image frame in which difference data between this image frame and two image frames before and after this image frame is stored. To be specific, the non-key frame does not completely reserve all content of this frame of picture (namely, the present frame of picture), so that a final picture can be generated only by superposing a previously buffered picture on a difference defined by a difference frame before or after the present frame. During decoding of the non-key frame, it is necessary to use information about the non-key frame itself with reference to information about another picture frame, to complete decoding and generate an image frame of the final picture. The non-key frames may be a P frame and/or a B frame. The non-key frame includes a forward difference frame and a bi-directional difference frame, the forward difference frame may be a P frame, and the bi-directional difference frame may be a B frame. The P frame represents a difference between a current frame and a previous key frame (or a P frame). The P frame uses a previous I frame or P frame to perform inter-frame prediction coding in a motion prediction manner. During decoding of the P frame, a difference defined by the present frame needs to be superposed on a previously buffered picture to generate a final picture (to be specific, the P frame is a difference frame, and the P frame has no complete picture data, and has only data that is differentiated from a picture of a previous frame). The B frame is a bi-directional difference frame, To be specific, the B frame records differences between the present frame and frames before and after it. The B frame can provide the highest compression ratio. During decoding, the frames before and after the B frame are depended, to be specific, not only a previously buffered picture needs to be obtained, but also a later picture needs to be decoded, and a final picture is obtained by superposing the pictures before and after the B frame on the present frame of data. A first frame of the GOP is definitely an I frame.

In this embodiment of the present disclosure, the frame data packet includes not only content required for decoding the video frame, but also the information such as the frame type of the video frame, and the frame type is stored in the frame data packet as the frame attribute information. Therefore, after the frame data packet of each video frame is obtained, the frame type of each video frame may be determined based on the frame attribute information in the frame data packet.

Operation S103: Determine multiple target sampling frames from the to-be-decoded video based on a quantity of key frames.

Herein, the target sampling frames are video frames configured for providing rendering data when rendering the to-be-decoded video, and the rendering data is stored in frame buffers respectively corresponding to the target sampling frames.

In some embodiments, a quantity of target sampling frames is less than a total quantity of video frames in the to-be-decoded video. After the frame type of each video frame is determined, the quantity of key frames and a quantity of non-key frames may be separately counted, and the target sampling frames are further determined from the key frames and the non-key frames based on the quantity of key frames. The target sampling frames are video frames configured for providing rendering data when rendering the to-be-decoded video.

In this embodiment of the present disclosure, the quantity of target sampling frames is less than the total quantity of video frames in the to-be-decoded video, To be specific, target sampling frames having the quantity are selected from all the video frames, and some non-key frames are excluded.

In an implementation process, when the quantity of key frames is greater than the quantity of target sampling frames, all target sampling frames may be directly determined from the key frames. When the quantity of key frames is less than the quantity of target sampling frames, all key frames may be determined as target sampling frames. In addition, a part of target sampling frames further needs to be determined from the non-key frames. When the quantity of key frames is equal to the quantity of target sampling frames, all key frames may be determined as target sampling frames.

In some embodiments, the quantity of target sampling frames may be determined according to an application scenario type of the to-be-decoded video, or determined according to video duration of the to-be-decoded video. The following describes a process of determining the quantity of target sampling frames.

In this embodiment of the present disclosure, each video frame is corresponding to one frame buffer. The frame buffer is inherently a space in a memory or hardware, and is responsible for storing pixel-related information of an image that needs to be rendered. To be specific, the frame buffer stores rendering data of a corresponding video frame, and the rendering data is pixel-related information of the corresponding video frame. Herein, the pixel-related information includes but is not limited to one or more of the following: a color buffer, a depth buffer (Z buffer), and a module buffer (Stencil buffer), where the color buffer is configured for recording pixel color information; the depth buffer is configured for recording a pixel depth value; and the module buffer is configured for defining a rendering region, and can create different rendering effects together with the depth buffer.

The target sampling frame may be a key frame, or may be a non-key frame.

For a key frame, rendering data stored in a frame buffer is data configured for rendering a complete picture of the key frame, to be specific, all content for rendering the present frame of picture is completely reserved in the frame buffer of the key frame, and the rendering data stored in the frame buffer of the key frame is all rendering data of the key frame. For a non-key frame, rendering data stored in a frame buffer of the non-key frame is a part of rendering data for rendering the non-key frame, where the rendering data stored in the frame buffer is difference data between the non-key frame and a video frame previous to the non-key frame in an image frame sequence, and the rendering data stored in the frame buffer of the non-key frame is configured for defining a difference between the non-key frame and the previous video frame. Alternatively, for a non-key frame, rendering data stored in a frame buffer may be difference data between the non-key frame and two video frames before and after the video frame in an image frame sequence, and the rendering data stored in the frame buffer of the non-key frame is configured for defining differences between the non-key frame and the two video frames before and after the non-key frame.

For a key frame, when image rendering is performed, rendering data of the key frame may be obtained from a frame buffer of the key frame, and image rendering is performed on the rendering data to obtain a complete picture of the key frame, to be specific, a video picture corresponding to the key frame may be obtained through rendering. For a non-key frame, when image rendering is performed, rendering data (which may be referred to as difference rendering data) of the non-key frame may be obtained from a frame buffer of the non-key frame, rendering data of one video frame before the non-key frame is obtained, then the difference rendering data is fused with the rendering data of the video frame before the non-key frame (namely, corresponding data in the rendering data of the video frame before the non-key frame is replaced with the difference rendering data) to obtain final rendering data that can be used for rendering the non-key frame, and image rendering is performed on the final rendering data to obtain a complete picture of the non-key frame, to be specific, a video picture corresponding to the non-key frame may be obtained through rendering. Alternatively, for a non-key frame, when image rendering is performed, rendering data (which may be referred to as difference rendering data) of the non-key frame may be obtained from a frame buffer of the non-key frame, rendering data of two video frames before and after the non-key frame is obtained, then the difference rendering data is fused with the rendering data of the two video frames before and after the non-key frame (to be specific, corresponding data in the rendering data of the two video frames before and after the non-key frame are replaced with the difference rendering data) to obtain final rendering data that can be used for rendering the non-key frame, and image rendering is performed on the final rendering data to obtain a complete picture of the non-key frame, to be specific, a video picture corresponding to the non-key frame may be obtained through rendering.

Operation S104: Obtain corresponding rendering data from a frame buffer of each of the target sampling frames.

Herein, the frame buffer of each target sampling frame may be first determined. The frame buffer includes information required for decoding the video frame. To be specific, the frame buffer is buffer data configured for providing information required for image rendering when image rendering is performed on the to-be-decoded video, the buffer data may include decoding information for decoding the video frame, and the decoding information is defined as information required for decoding a corresponding video frame. Information required for decoding a corresponding video frame may be referred to as rendering data of the corresponding video frame, and a video picture of the corresponding video frame can be rendered by using the rendering data.

In an implementation process, all video frames of the to-be-decoded video form a video frame sequence. In the video frame sequence, all the video frames are sequentially arranged according to the sequential order of the video frames in the to-be-decoded video, and there is a frame buffer sequence corresponding to the video frame sequence. In the frame buffer sequence, data related to the frame buffer of each video frame is included, for example, a buffer identifier of the frame buffer, and the buffer identifier is configured for uniquely identifying an address of the corresponding frame buffer. In this embodiment of the present disclosure, when target sampling frames having the quantity of target sampling frames are obtained, the target sampling frames may be reassembled into a sampling frame sequence according to the sequential order thereof in the video frame sequence. **In** addition, a frame index corresponding to each target sampling frame in the video frame sequence may be further obtained. Correspondingly, a frame index sequence corresponding to the sampling frame sequence may also be generated according to the sequential order of the target sampling frames in the video frame sequence. Therefore, when the frame buffer is obtained, the frame buffer of the target sampling frame corresponding to each frame index may be successively obtained from the frame buffer sequence based on the frame index sequence.

Operation S105: Perform video decoding on the to-be-decoded video based on the rendering data to obtain a decoded video corresponding to the to-be-decoded video.

**In** this embodiment of the present disclosure, after the rendering data stored in the frame buffer of each target sampling frame in the sampling frame sequence is obtained, a corresponding video frame may be rendered based on the rendering data of each target sampling frame, so as to implement video decoding on the to-be-decoded video, to obtain multiple decoded image frames, and form a final decoded video by using the multiple decoded image frames.

Herein, video decoding refers to a process in which rendering data in a frame buffer of a target sampling frame is read, and the rendering data is decoded to obtain a decoded image frame configured for presenting an image of the target sampling frame, to be specific, image rendering is performed on the rendering data to obtain the decoded image frame. Video decoding may be understood as a process of performing image rendering on rendering data in a frame buffer of a target sampling frame. To be specific, in this embodiment of the present disclosure, video decoding based on rendering data in a frame buffer of a target sampling frame may be performed by first extracting buffer data (namely, rendering data) that is configured for providing information required for image rendering when image rendering is performed on the target sampling frame, and then rendering the extracted buffer data into an image frame to obtain the decoded video frame. To be specific, image rendering is performed based on the buffer data of the target sampling frame, to obtain a frame of decoded image frame corresponding to the to-be-decoded video. After decoded image frames of all the target sampling frames are obtained, multiple decoded image frames are concatenated into the decoded video according to the sequential order of the target sampling frames in the to-be-decoded video.

**In** this embodiment of the present disclosure, a decoded image frame sequence corresponding to a sampling frame sequence may be obtained by obtaining each decoded image frame, and the decoded image frame sequence includes a decoded image frame corresponding to each target sampling frame in the sampling frame sequence. The decoded video is obtained by performing video visualization processing on the decoded image frame sequence, to be specific, the decoded image frames in the decoded image frame sequence are concatenated into the decoded video in a video form according to the sequential order in the decoded image frame sequence.

In this embodiment of the present disclosure, a quantity of video frames included in the obtained decoded video is far less than a quantity of video frames corresponding to the original to-be-decoded video, and the decoded video includes key frames in the to-be-decoded video. Therefore, information in the to-be-decoded video can be completely reserved. In this way, in an application field such as video recognition, after video decoding is first performed on a to-be-recognized video by using the video decoding method provided in this embodiment of the present disclosure, a decoded video is obtained, so that recognition is performed on the decoded video, and video recognition efficiency can be greatly improved.

According to the video decoding method provided in this embodiment of the present disclosure, a frame type of each video frame is determined based on frame attribute information in a frame data packet of each video frame in a to-be-decoded video. The frame type includes one of a key frame and a non-key frame. Then, target sampling frames are determined from key frames and non-key frames based on a quantity of key frames. A quantity of target sampling frames is less than a total quantity of video frames in the to-be-decoded video. Rendering data stored in a frame buffer of each target sampling frame is obtained. Video decoding is performed on the to-be-decoded video based on the rendering data in the frame buffer of the target sampling frame, to obtain a decoded video corresponding to the to-be-decoded video. In this way, the quantity of target sampling frames is less than the total quantity of video frames in the to-be-decoded video, to be specific, target sampling frames are selected from all video frames, key frames are preferentially extracted, and some non-key frames are excluded, so that similar redundant frames can be reduced, a video decoding process can be accelerated, and video decoding accuracy can be improved.

In some embodiments, the video decoding system includes at least a terminal and a server, and a video application is installed on the terminal. When the user requests to decode the to-be-decoded video in the video application, the method in this embodiment of the present disclosure may be used, and video recognition may be further performed on the decoded video.

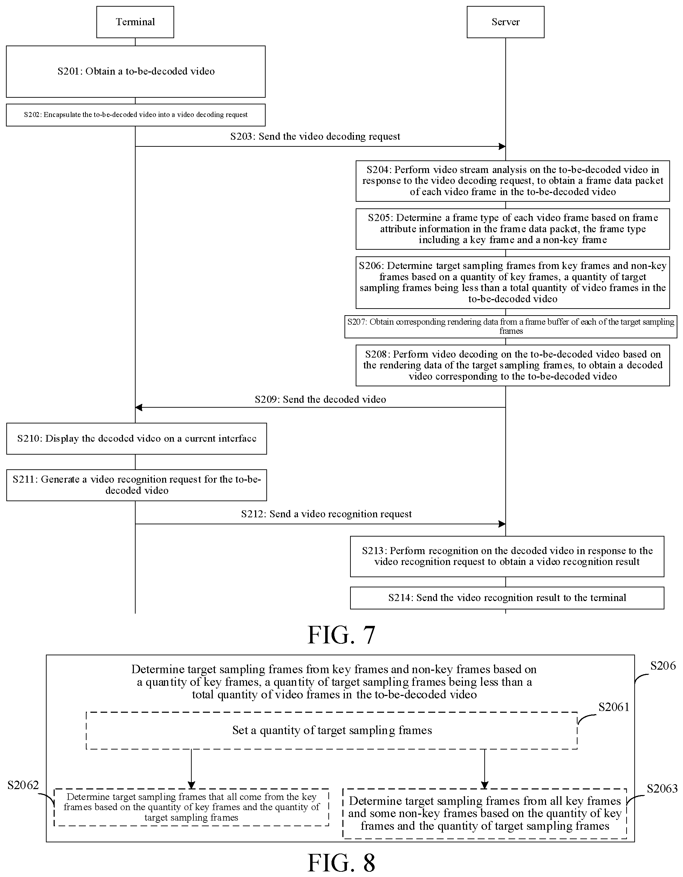

FIG. 7 is another optional schematic flowchart of a video decoding method according to an embodiment of the present disclosure. The video decoding method may be applied to a video processing process, to be specific, a video is decoded before video processing, and corresponding video processing is performed based on a decoded video. As shown in FIG. 7, the method includes the following operations S201 to S214:

Operation S201: A terminal obtains a to-be-decoded video.

Herein, the to-be-decoded video may be any type of video, for example, a long video, a short video, a video released on a specific website, a television play video, a movie video, or a video generated by using specific video production software.

The terminal may obtain the to-be-decoded video by using a video application. For example, the to-be-decoded video may be a video in the video application, or a video downloaded by the video application from another platform, or a video uploaded by a user by using a client of the video application. In the video application, a video processing function may be provided. The video processing function herein includes but is not limited to functions such as video type recognition and video content recognition. A user may select any video on the client of the video application, and taps a trigger button of the video processing function, so as to trigger a video processing operation of the video (namely, the to-be-decoded video). When video processing is performed, video decoding needs to be first performed on the video, and then corresponding video processing is performed after video decoding is completed.

Operation S202: The terminal encapsulates the to-be-decoded video into a video decoding request.

In this embodiment of the present disclosure, after the to-be-decoded video is obtained, the to-be-decoded video is encapsulated to form the video decoding request. In some embodiments, the to-be-decoded video may alternatively be encapsulated into the video processing request (for example, the video processing request herein may be a video recognition request), so that after receiving the video processing request, a server first decodes the to-be-decoded video in response to the video processing request and then performs related video processing on the to-be-decoded video. To be specific, when the video decoding request is sent to the server, the server performs video decoding processing. When the video processing request is sent to the server, the server performs video decoding processing and related video processing.

Operation S203: The terminal sends the video decoding request to the server.

Operation S204: The server performs video stream analysis on the to-be-decoded video in response to the video decoding request, to obtain a frame data packet of each video frame in the to-be-decoded video.

Herein, video stream analysis is to parse an encapsulated data packet in which video frame information of the to-be-decoded video is encapsulated, so as to obtain a frame data package of each video frame in the to-be-decoded video. In this embodiment of the present disclosure, for the to-be-decoded video, video frame information of each video frame may be encapsulated into a respective frame data packet in advance. The frame data packet includes not only content required for decoding the video frame, but also information such as a frame type of the video frame. The frame type may be stored in the frame data packet in a form of frame attribute information.

Operation S205: The server determines a frame type of each video frame based on frame attribute information in the frame data packet. The frame type includes one of a key frame and a non-key frame.

In some embodiments, the frame type of each video frame may be determined in the following manner: First, the frame attribute information in the frame data packet is obtained, and the frame attribute information includes the frame type of the corresponding video frame. Then, the frame attribute information is parsed to obtain the frame type of the video frame corresponding to the frame data packet.

In an implementation process, the frame data packet includes not only content required for decoding the video frame, but also the information such as the frame type of the video frame, and the frame type is stored in the frame data packet as the frame attribute information. Therefore, after the frame data packet of each video frame is obtained, the frame attribute information in each frame data packet may be first obtained, and it is determined, according to the frame attribute information, whether the frame type of the video frame is a key frame or a non-key frame.

For example, the frame data packet records the video frame is which one of three code frames: an I frame, a P frame, and a B frame. Therefore, after the frame attribute information of each frame data packet is obtained, a corresponding video frame may be determined based on the frame attribute information as which one of three code frames: an I frame, a P frame, and a B frame.

Operation S206: The server determines target sampling frames from key frames and non-key frames based on a quantity of key frames. A quantity of target sampling frames is less than a total quantity of video frames in the to-be-decoded video.

In some embodiments, referring to FIG. 8, FIG. 8 shows that operation S206 may be implemented by using the following operations S2061 to S2063:

Operation S2061: Set the quantity of target sampling frames.

In some embodiments, the quantity of target sampling frames may be set in any of the following manners.

Manner 1: determining an application scenario type of a decoded video, and determining the quantity of target sampling frames based on the application scenario type. For example, if a decoded video obtained after the to-be-decoded video is decoded is configured for performing video type recognition, a specific first sampling frame quantity may be set. If the decoded video obtained after the to-be-decoded video is decoded is configured for performing video content analysis, another specific second sampling frame quantity may be set. The second sampling frame quantity may be greater than the first sampling frame quantity, so that it can be ensured that the decoded video includes a relatively large quantity of target sampling frames, and video content in the to-be-decoded video is accurately analyzed.

For another example, if the to-be-decoded video is a content-rich video generated by the user by using specific software, a relatively large quantity of target sampling frames (for example, the quantity of target sampling frames may be greater than a quantity threshold) may be set when video recognition is performed on the to-be-decoded video, thereby ensuring that a final recognition result is more accurate.

In some embodiments, the quantity of target sampling frames may be set to a fixed value in advance, and target sampling frames having the quantity are obtained through sampling for different to-be-decoded videos.

Manner 2: determining the quantity of target sampling frames based on video duration of the to-be-decoded video.

Herein, for a to-be-decoded video with relatively long video duration (for example, the video duration is greater than a duration threshold), a relatively large quantity of target sampling frames (for example, the quantity of target sampling frames may be greater than a quantity threshold) may be set. In this way, it can be ensured that more target sampling frames are obtained for a to-be-decoded video with relatively long video duration and a relatively large amount of content, and more sampling is performed for key frames in the to-be-decoded video, thereby increasing an amount of information included in a finally generated decoded video, and further improving recognition accuracy of the decoded video in a further video recognition process.

In an implementation, when the video duration is less than or equal to the duration threshold, it may be determined that the quantity of target sampling frames is a third sampling frame quantity. When the video duration is greater than the duration threshold, it is determined that the quantity of target sampling frames is a fourth sampling frame quantity. The third sampling frame quantity is less than the fourth sampling frame quantity.

In another implementation, multiple duration interval gradient ranges and a quantity corresponding to each duration interval gradient range may be preset to form a mapping relationship between duration interval gradient ranges and different quantities. In this way, after the video duration of the to-be-decoded video is obtained, a duration interval gradient range to which the video duration of the to-be-decoded video belongs may be determined, so as to determine a target duration interval gradient range. Then, based on the foregoing mapping relationship, a target sampling frame quantity corresponding to the target interval duration gradient range is determined, and the target sampling frame quantity is determined as the quantity of target sampling frames in this embodiment of the present disclosure.

For example, multiple duration interval gradient ranges may be set: [0, 10 minutes], [10 minutes, 20 minutes], [20 minutes, 30 minutes], [30 minutes, 40 minutes], [40 minutes, 50 minutes], where [0, 10 minutes] is corresponding to a sampling frame quantity K (where K is an integer greater than 1), [10 minutes, 20 minutes] is corresponding to a sampling frame quantity 2K, [20 minutes, 30 minutes] is corresponding to a sampling frame quantity 3K, [30 minutes, 40 minutes] is corresponding to a sampling frame quantity 4K, and [40 minutes, and 50 minutes] is corresponding to a sampling frame quantity 5K. Assuming that the video duration of the to-be-decoded video is determined to be 38 minutes, the quantity of target sampling frames may be determined to be 4K.

Operation S2062: Determine target sampling frames that all come from the key frames based on the quantity of key frames and the quantity of target sampling frames.

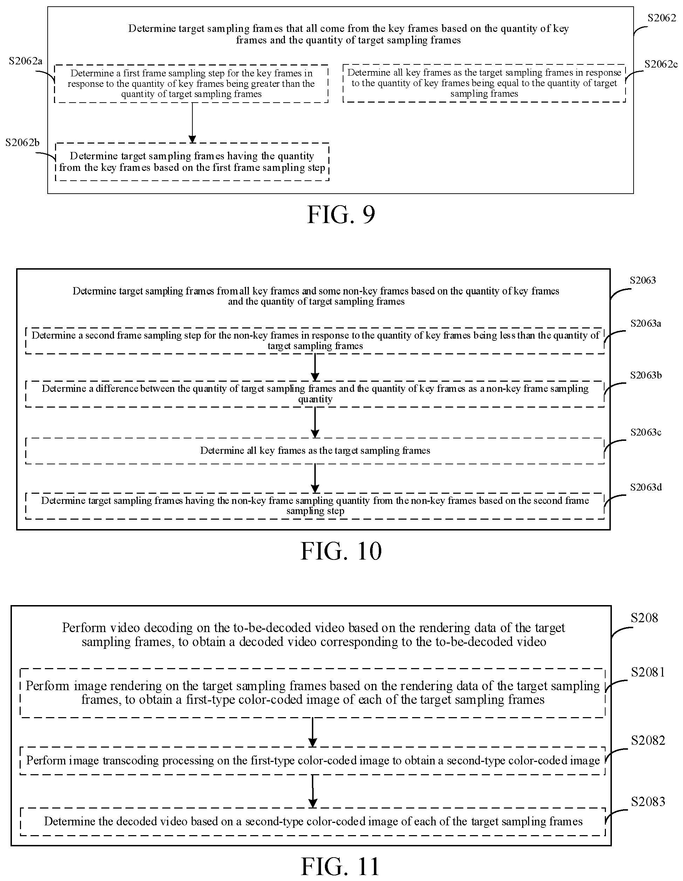

In some embodiments, the quantity of key frames may be greater than or equal to the quantity of target sampling frames. Referring to FIG. 9, FIG. 9 shows that operation S2062 may be implemented by using the following operations S2062a to S2062c:

Operation S2062a: Determine a first frame sampling step for the key frames in response to the quantity of key frames being greater than the quantity of target sampling frames.

In some embodiments, the first frame sampling step for the key frames may be determined in the following manner: First, a first ratio between the quantity of key frames and the quantity of target sampling frames is determined. Then, rounding processing is performed on the first ratio to obtain the first frame sampling step. Herein, rounding processing refers to rounding a non-integer number by rounding off the number after the decimal point to make the number an integer, or directly deleting the data after the decimal point and reserving only the integer portion before the decimal point to form an integer value. In this embodiment of the present disclosure, the first frame sampling step may be obtained by rounding the first ratio, or the decimal portion after the decimal point is removed from the first ratio, and the integer portion is reserved to form the first frame sampling step.

Operation S2062b: Determine target sampling frames having the quantity from the key frames based on the first frame sampling step.

In this embodiment of the present disclosure, a key frame sequence may be formed for all key frames in the to-be-decoded video. In a sampling process, target sampling frames having this quantity may be obtained by performing sampling in the key frame sequence according to the first frame sampling step. The first key frame in the key frame sequence is a target sampling frame that needs to be sampled, and then one target sampling frame is obtained through sampling at an interval of the first frame sampling step.

For example, the key frame may be an I frame. When the quantity of key frames is less than the quantity of target sampling frames, to be specific, when a quantity of I frames is greater than a total quantity of frames to be sampled, some I frames may be sampled. When I frames are sampled, a uniform sampling manner may be used, to be specific, target sampling frames having this quantity are obtained through sampling by using the first frame sampling step from a frame sequence formed by multiple I frames.

Operation S2062c: Determine all key frames as the target sampling frames in response to the quantity of key frames being equal to the quantity of target sampling frames.

Herein, because the quantity of key frames is equal to the quantity of target sampling frames, all key frames may be directly sampled, to be specific, all the key frames are determined as the target sampling frames.

For example, the key frame may be an I frame. When the quantity of key frames is equal to the quantity of target sampling frames, to be specific, a quantity of I frames is equal to a total quantity of frames to be sampled, all I frames may be sampled to obtain the target sampling frames, to be specific, all the I frames are determined as the target sampling frames.

Operation S2063: Determine target sampling frames from all key frames and some non-key frames based on the quantity of key frames and the quantity of target sampling frames.

In some embodiments, the quantity of key frames may be less than the quantity of target sampling frames. Referring to FIG. 10, FIG. 10 shows that operation S2063 may be implemented by using the following operations S2063a to S2063d:

Operation S2063a: Determine a second frame sampling step for the non-key frames in response to the quantity of key frames being less than the quantity of target sampling frames.

In some embodiments, non-key frames include a forward difference frame and a bi-directional difference frame. The forward difference frame is a video frame that stores difference data between the video frame and a previous video frame. To be specific, when the forward difference frame is decoded, a previously buffered picture needs to be superposed on a difference defined by the present forward difference frame, so that a final picture can be generated. The key frame completely reserves all content of the frame of picture, and does not refer to another picture frame. Coding is performed only by using information of the present frame, and a final picture frame may be generated. During decoding, only the present frame of data is needed to decode the key frame. It can be learned that, compared with the key frame, the forward difference frame does not completely reserve all content of the present frame of picture, but reserves only a difference between the present frame and the previous frame. In this embodiment of the present disclosure, the forward difference frame may be a P frame, to be specific, the P frame is a difference frame, and the P frame has no complete picture data, and only has data that is differentiated from a picture of a previous frame. The P frame represents a difference between a current frame and a previous key frame (or a P frame). The P frame uses a previous I frame or P frame to perform inter-frame prediction coding in a motion prediction manner. During decoding of the P frame, a difference defined by the present frame needs to be superposed on a previously buffered picture to generate a final picture. A bi-directional difference frame refers to a video frame that stores differential data between the video frame and two frames before and after the video frame. During decoding of the bi-directional difference frame, the frames before and after the bi-directional difference frame are depended, to be specific, not only a previously buffered picture needs to be obtained, but also a later picture needs to be decoded, and a final picture is obtained by superposing the pictures before and after the bi-directional difference frame on the present frame of data. In this embodiment of the present disclosure, the bi-directional difference frame may be a B frame.

In this embodiment of the present disclosure, a second frame sampling step for a non-key frame may be determined in the following manner: First, a quantity of forward difference frames is obtained; then, a second ratio between the quantity of forward difference frames and the non-key frame sampling quantity is determined; and finally, rounding processing is performed on the second ratio to obtain the second frame sampling step.

Operation S2063b: Determine a difference between the quantity of target sampling frames and the quantity of key frames as a non-key frame sampling quantity.

Operation S2063c: Determine all key frames as the target sampling frames.

In this embodiment of the present disclosure, all the key frames are determined as the target sampling frames. In this case, because the quantity of target sampling frames is not yet reached, video frames having the non-key frame sampling quantity further need to be sampled from the non-key frames.

Operation S2063d: Determine target sampling frames having the non-key frame sampling quantity from the non-key frames based on the second frame sampling step.

Herein, a non-key frame sequence may be formed for all non-key frames in the to-be-decoded video. In a sampling process, target sampling frames having the non-key frame sampling quantity may be obtained by performing sampling in the non-key frame sequence according to the second frame sampling step. The first frame in the non-key frame sequence is a target sampling frame that needs to be sampled, and then one target sampling frame is sampled at an interval of the second frame sampling step.

In some embodiments, the non-key frames include a forward difference frame and a bi-directional difference frame, and the bi-directional difference frame may be removed from the video frame sequence corresponding to the to-be-decoded video. In this way, when target sampling frames having the non-key frame sampling quantity are determined from the non-key frames, the target sampling frames having the non-key frame sampling quantity may be determined from the forward difference frames based on the second frame sampling step. To be specific, the determined target sampling frames include a key frame and a forward difference frame, and the bi-directional difference frame may not be sampled.

For example, the key frame may be an I frame, the forward difference frame may be a P frame, and the bi-directional difference frame may be a B frame. When the quantity of key frames is less than the quantity of target sampling frames, to be specific, when a quantity of I frames is less than a total quantity of frames to be sampled, all I frames may be sampled, and at the same time, some P frames may be sampled. When P frames are sampled, a uniform sampling manner may be used, to be specific, a required quantity of frames is obtained through sampling by using the second frame sampling step from a frame sequence formed by multiple P frames. A sum of a quantity of all I frames and a quantity of sampled P frames is equal to the quantity of target sampling frames.

Operation S207: The server obtains corresponding rendering data from a frame buffer of each of the target sampling frames.

In some embodiments, during determining of the target sampling frame, a frame index of each target sampling frame may be determined, so that an address of a frame buffer corresponding to each target sampling frame is determined from the frame buffer sequence of the to-be-decoded video based on the frame index of each target sampling frame. After the address of the frame buffer is determined, the rendering data of each target sampling frame may be extracted from the frame buffer.

An embodiment of the present disclosure provides a method for determining a target sampling frame and a frame index, including the following operations: first, determining a video frame sequence formed by key frames and non-key frames; obtaining a frame index sequence corresponding to the video frame sequence; determining target sampling frames from the video frame sequence based on a quantity of key frames; and determining a frame index of each target sampling frame based on the frame index sequence.

Operation S208: The server performs video decoding on the to-be-decoded video based on the rendering data of the target sampling frames, to obtain a decoded video corresponding to the to-be-decoded video.

In some embodiments, the frame buffer may include a video frame array, where the video frame array may include buffer data required when image rendering is performed on the video frame, the buffer data may include decoding information for decoding the video frame, and the buffer data is the rendering data of the target sampling frame. Referring to FIG. 11, FIG. 11 shows that operation S208 may be implemented by using the following operations S2081 to S2083:

Operation S2081: Perform image rendering on the target sampling frames based on the rendering data of the target sampling frames, to obtain a first-type color-coded image of each of the target sampling frames.

For example, the first-type color-coded image may be an image in a YUV format. The YUV format is a color coding method, Y represents brightness, U and V represent chroma, and the YUV format is mainly configured for optimizing transmission of a color video signal. Generally, an image obtained after video decoding is in a YUV format.

Operation S2082: Perform image transcoding processing on the first-type color-coded image to obtain a second-type color-coded image.

For example, the second-type color-coded image may be an image in an RGB format. The RGB format is a color standard in the industry. Various colors are obtained by changing the red (R), green (G), and blue (B) color channels and adding them together. RGB represents colors of red, green, and blue channels.

In this embodiment of the present disclosure, image transcoding processing may be performed by using a conversion formula between a YUV format image and an RGB format image, to obtain an RGB format image.

Operation S2083: Determine the decoded video based on a second-type color-coded image of each of the target sampling frames.

Herein, image decoding may be performed on the second-type color-coded image of each target sampling frame to obtain the decoded video.

Operation S209: The server sends the decoded video to the terminal.

Operation S210: The terminal displays the decoded video on a current interface.

Operation S211: The terminal generates a video recognition request for the to-be-decoded video.

In some embodiments, after receiving the decoded video, the terminal may further request the server to recognize the decoded video, thereby implementing recognition of the original to-be-decoded video.

Operation S212: The terminal sends the video recognition request to the server.

Operation S213: The server performs recognition on the decoded video in response to the video recognition request to obtain a video recognition result.

Operation S214: The server sends the video recognition result to the terminal.

According to the video decoding method provided in this embodiment of the present disclosure, a frame type of each video frame is determined based on frame attribute information in a frame data packet of each video frame in a to-be-decoded video. The frame type includes an I frame, a P frame, and a B frame. Then, target sampling frames are determined from I frames, P frames, and B frames based on a quantity of key frames. During determining of the target sampling frames, I frames are first sampled. If a quantity of I frames can meet a sampling condition, all target sampling frames are determined from the I frames. If the quantity of I frames cannot meet the sampling condition, all I frames are determined as target sampling frames, and at the same time, some target sampling frames are sampled from the P frames. In this way, because decoding of the I frames and the P frames does not need to depend on the B frames, after a sequence is reorganized for the target sampling frames obtained through sampling, each frame can still be normally decoded. In addition, by removing the B frames, inter-frame redundancy can be reduced and a decoding process can be accelerated, thereby improving video decoding efficiency.

The following describes an exemplary application of the embodiments of the present disclosure in an actual application scenario.

An embodiment of the present disclosure provides a video decoding method based on fast uniform frame capture of key frame extraction. In this method, a quantity of video key frames (I frames) and time stamp distribution are first obtained, and it is determined, according to the quantity of key frames, whether another non-key frame needs to be decoded. If the quantity of key frames already meets a quantity of frames that are expected to be obtained by uniform frame capture, the key frames are decoded directly and then extracted uniformly. Otherwise, the key frames are decoded preferentially, and then the remaining non-key frames are decoded for padding. In addition, considering that a picture of a frame B is similar to a picture of a P frame adjacent to the frame B, and that decoding of the frame B needs to depend on frames before and after the frame B, in this embodiment of the present disclosure, only the P frame is considered during decoding of a non-key frame, thereby increasing a decoding speed. Compared with the conventional uniform frame capture-based video decoding method, in this embodiment of the present disclosure, a key frame is preferentially extracted. While captured video frames can represent one video to a maximum extent, similar redundant frame decoding can be reduced. In addition, because generally more key frames are set for a long video during coding, this embodiment of the present disclosure has clearer effects on decoding acceleration of the long video. The video decoding method in this embodiment of the present disclosure may be applied to all applications that require video decoding, such as action recognition and video content description.

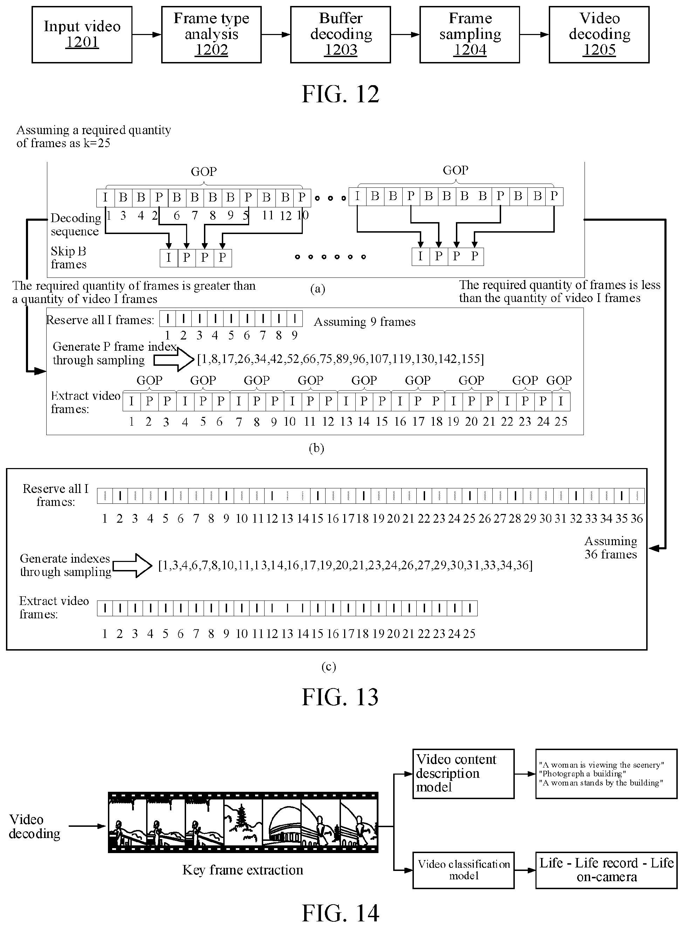

FIG. 12 is a schematic diagram of an application process of a video decoding method according to an embodiment of the present disclosure. As shown in FIG. 12, in the video decoding method in this embodiment of the present disclosure, first video stream analysis (namely, frame type analysis 1202) is performed on an input video 1201, to obtain a type of each frame, count distribution of I frames and P frames, discard B frames, and perform sequence reassembly on the remaining I frames and P frames. Then, buffer decoding 1203 is performed on a reassembled video sequence. Because decoding of the I frames and the P frames does not need to depend on the B frames, each frame can still be normally decoded from the reassembled sequence. A process of frame sampling 1204 is implemented by determining whether the P frames need to be decoded according to a quantity of I frames. If the quantity of I frames meets a desired quantity of frames, sampling and video decoding 1205 are directly performed on the I frames. Otherwise, all the I frames are decoded first and then the P frames are sampled for padding.

The following describes the frame type analysis operation in this embodiment of the present disclosure.

In a video coding and decoding process, video frames are encapsulated in different frame data packets. The frame data packet includes not only content (namely, rendering data) required for decoding the video frame, but also a type of the video frame (an I frame, a P frame, or a B frame). To obtain a frame type of each video frame, it is only necessary to obtain attribute information in the frame data packet, and it is unnecessary to decode the video frame. Therefore, before decoding, types of all video frames may be obtained. Then, a quantity of key frames and a quantity of non-key frames in a to-be-decoded video can be counted. Considering that decoding of the B frame depends on frames before and after the B frame, and that the picture of the B frame is similar to pictures of an I frame and a P frame adjacent to the B frame, only decoding of the I frame and the P frame is considered in this embodiment of the present disclosure. As shown in part (a) of FIG. 13, FIG. 13 is a decoding plus frame sampling process of a frame buffer according to an embodiment of the present disclosure.

The following describes a frame buffer decoding process in this embodiment of the present disclosure.

Compared with the conventional decoding method, this embodiment of the present disclosure preferentially decodes a key frame (I frame), and then decodes a non-key frame. In frame type analysis, a quantity $I_{num}$ of key frames is already obtained. Assuming that a quantity of frames that need to be captured is N, there are the following two cases:

The first case is: $I_{num}<N$. In this case, because the quantity of key frames is less than the quantity of frames that need to be intercepted, after decoding of the key frame buffer is completed, remaining non-key frames need to be decoded, and then sampled for padding. Although the process still decodes all frames, the decoding process is still faster than the conventional method because the B frame is ignored.

The second case is: $I_{num} > N$. If the quantity of key frames already meets the quantity of frames that need to be captured, N frames are directly uniformly sampled from the key frames for buffer decoding. In addition to ensuring that the key frames cover the entire video as much as possible, the key frames can also cover a video frame whose picture changes greatly. In addition, because only the key frames are decoded, the decoding speed can be further increased.

In a frame sampling process, the foregoing two cases of the buffer decoding process are respectively related to uniform sampling of P frames and uniform sampling of I frames. Assuming that the required quantity of frames is k, a position of a captured frame may be obtained according to a quantity n of video frames:

The step is calculated according to the required quantity k of frames by using the following formula (1):

$$s=[n/k] \qquad (1).$$

[ ] is a rounding symbol, and s represents an interval between required frames. If an index value of the first frame is $i_1$, an index value of the second frame is $i_2 = i_1 + s$, and further, an index value $i_N = i_1 + k*s$ of the last frame may be calculated, so as to finally obtain position information of captured frames. $[i_1, i_2, i_3, ..., i_k]$. Generally, an index value of the initial frame may be set to 1.

In the first case of buffer decoding, the quantity of required P frames is $k = N - I_{num}$, and the quantity n of video frames is corresponding to the total quantity of video P frames, as shown in part (b) in FIG. 13. In the second case, the quantity of required I frames is k=N, and in this case, the quantity of video frames is $n = I_{num}$, as shown in part (c) in FIG. 13.

The following describes the video decoding process in this embodiment of the present disclosure.

Video decoding is a process of restoring a frame buffer in a cache to a complete image. The captured frame index information obtained based on the frame sampling process may be converted from the buffered video frame sequence to obtain a corresponding video frame array (the video frame array includes rendering data of the video frame). In some embodiments, in this case, a video frame format is YUV, and still needs to be converted into an RGB image through transcoding. An implementation of converting the YUV format into the RGB format is in the following formulas (2) to (4):

$$R=Y+1.403*V \qquad (2);$$

$$G=Y-0.344*U-0.714*V \qquad (3);$$

$$B=Y+1.770*U \qquad (4).$$

Generally, a pixel value range of RGB needs to be further limited to [0, 255]. Therefore, the foregoing formulas may be further written as the following formulas (5) to (7):

$$R=Y+1.403*(V-128) \qquad (5);$$

$$G=Y-0.344*(U-128)-0.714*(V-128) \qquad (6);$$

$$B=Y+1.770*(U-128) \qquad (7).$$

The following uses an example to describe an application of the method in this embodiment of the present disclosure.

This embodiment of the present disclosure serves as a common video uniform frame capture method, and may be applied to scenarios such as video classification and video content description. As shown in FIG. 14, a video key frame can be extracted from an input video by using the method in this embodiment of the present disclosure. Compared with the conventional method, in this embodiment of the present disclosure, a key frame can be configured for decoding some video frames whose picture changes greatly as much as possible, so that redundancy between decoded picture frames is as small as possible. The decoded video frame is sent to a video content description model and a video classification model for further prediction, to obtain a group of description and video type information separately.

In this embodiment of the present disclosure, fast video uniform decoding is implemented based on the GOP concept from two perspectives of key frame decoding and non-key frame de-redundancy. Advantages of this embodiment of the present disclosure are at least as follows: First, only I frames and P frames are considered for decoding, so that redundant non-key frames are reduced, and decoding acceleration is implemented. Second, key frames are decoded preferentially, so as to ensure that frames whose picture changes greatly are decoded as much as possible, so as to reduce a miss.

This embodiment of the present disclosure may be applied to all applications that require video decoding. For non-key frames, in addition to P frames in this embodiment of the present disclosure, P frames and B frames may be used at the same time. In addition, the key frame-based decoding may be used in addition to uniform frame capture, and may be further used in continuous frame capture, to be specific, consecutive P frames after the I frame are selected, so as to maintain the time sequence of the video frames.

In this embodiment of the present disclosure, content of user information is involved, for example, information such as a to-be-decoded video, a decoded video, and a video recognition result. If data related to user information or enterprise information is involved, when this embodiment of the present disclosure is applied to a specific product or technology, a user's permission or consent needs to be obtained, and related data collection, use, and processing need to comply with relevant laws and standards of a relevant country and region.

The following continues to describe an example structure of a video decoding device 354 provided in an embodiment of the present disclosure when implemented as software modules. In some embodiments, as shown in FIG. 5, the video decoding device 354 includes: a video stream analysis module 3541, configured to perform video stream analysis on a to-be-decoded video to obtain a frame data packet of each video frame in the to-be-decoded video; the video stream analysis referring to parsing an encapsulated data packet in which video frame information of the to-be-decoded video is encapsulated; the video stream analysis referring to parsing an encapsulated data packet in which video frame information of the to-be-decoded video is encapsulated; a first determining module 3542, configured to determine a frame type of each video frame based on frame attribute information in the frame data packet; the frame type including one of a key frame and a non-key frame; a second determining module 3543, configured to: determine multiple target sampling frames from the to-be-decoded video based on a quantity of key frames, the target sampling frames being video frames configured for providing rendering data when rendering the to-be-decoded video, and the rendering data being stored in frame buffers respectively corresponding to the target sampling frames; an obtaining module 3544, configured to obtain corresponding rendering data from a frame buffer of each of the target sampling frames; and a video decoding module 3545, configured to perform video decoding on the to-be-decoded video based on the rendering data to obtain a decoded video corresponding to the to-be-decoded video.

In some embodiments, the second determining module 3543 is further configured to: set a quantity of target sampling frames; and determine target sampling frames that all come from the key frames based on the quantity of key frames and the quantity of target sampling frames; or determine target sampling frames from all key frames and some non-key frames based on the quantity of key frames and the quantity of target sampling frames.

In some embodiments, the second determining module 3543 is further configured to: determine an application scenario type of the decoded video, and set the quantity of target sampling frames based on the application scenario type; or set the quantity of target sampling frames based on video duration of the to-be-decoded video.

In some embodiments, the second determining module 3543 is further configured to: determine a first frame sampling step for the key frames in response to the quantity of key frames being greater than the quantity of target sampling frames; determine target sampling frames having the quantity from the key frames based on the first frame sampling step; and determine all key frames as the target sampling frames in response to the quantity of key frames being equal to the quantity of target sampling frames.

In some embodiments, the second determining module 3543 is further configured to: determine a first ratio between the quantity of key frames and the quantity of target sampling frames; and perform rounding processing on the first ratio to obtain the first frame sampling step.

In some embodiments, the second determining module 3543 is further configured to: determine a second frame sampling step for the non-key frames in response to the quantity of key frames being less than the quantity of target sampling frames; determine a difference between the quantity of target sampling frames and the quantity of key frames as a non-key frame sampling quantity; determine all key frames as the target sampling frames; and determine target sampling frames having the non-key frame sampling quantity from the non-key frames based on the second frame sampling step.

In some embodiments, the non-key frames include forward difference frames and bi-directional difference frames; the device further includes: a processing module, configured to delete the bi-directional difference frames from a video frame sequence corresponding to the to-be-decoded video; and the second determining module 3543 is further configured to: determine the target sampling frames having the non-key frame sampling quantity from the forward difference frames based on the second frame sampling step.

In some embodiments, the second determining module 3543 is further configured to: obtain a quantity of forward difference frames; determine a second ratio between the quantity of forward difference frames and the non-key frame sampling quantity; and perform rounding processing on the second ratio to obtain the second frame sampling step.

In some embodiments, the first determining module 3542 is further configured to: obtain the frame attribute information in the frame data packet; the frame attribute information including a frame type of a corresponding video frame; and parse the frame attribute information to obtain a frame type of a video frame corresponding to the frame data packet.

In some embodiments, the second determining module 3543 is further configured to: determine a video frame sequence formed by the key frames and the non-key frames; obtain a frame index sequence corresponding to the video frame sequence; determine the target sampling frames from the video frame sequence based on the quantity of key frames; and determine a frame index of each of the target sampling frames based on the frame index sequence.

In some embodiments, the obtaining module 3544 is further configured to: obtain the frame buffer of each of the target sampling frames from a frame buffer sequence of the to-be-decoded video based on the frame index of each of the target sampling frames.

In some embodiments, the video decoding module 3545 is further configured to: perform image rendering on the target sampling frames based on the rendering data of the target sampling frames, to obtain a first-type color-coded image of each of the target sampling frames; perform image transcoding processing on the first-type color-coded image to obtain a second-type color-coded image; and determine the decoded video based on a second-type color-coded image of each of the target sampling frames.

The descriptions of the device in the embodiment of the present disclosure are similar to the foregoing descriptions of the method embodiment, have beneficial effects similar to those of the method embodiment, and therefore are not described in detail. For technical details that are not disclosed in this device embodiment, refer to the descriptions of the method embodiment of the present disclosure.

An embodiment of the present disclosure provides a computer program product, where the computer program product includes executable instructions, and the executable instructions are computer instructions. The executable instructions are stored in a computer-readable storage medium. When a processor of an electronic device reads the executable instructions from the computer-readable storage medium, and the processor executes the executable instructions, the electronic device is enabled to perform the method in the embodiment of the present disclosure.

An embodiment of the present disclosure provides a storage medium having executable instructions stored therein. When the executable instructions are executed by a processor, the processor is caused to perform the method provided in the embodiment of the present disclosure, for example, the method shown in FIG. 6.

In some embodiments, the storage medium may be a computer-readable storage medium, for example, a memory such as a ferromagnetic random access memory (FRAM), a read-only memory (ROM), a programmable read-only memory (PROM), an erasable programmable read-only memory (EPROM), an electrically erasable programmable read-only memory (EEPROM), a flash memory, a magnetic surface memory, an optical disc, or a compact disc read-only memory (CD-ROM); or may be any device that includes one or any concatenation of the foregoing memories.

In some embodiments, the executable instructions may be compiled in a form of a program, software, a software module, a script, or code, in any form of a programming language (including a compilation or interpretation language, or a declarative or procedural language), and may be deployed in any form, including being deployed as an independent program or as a module, component, subroutine, or another unit suitable for use in a computing environment.

As an example, the executable instructions may be but are not necessarily corresponding to a file in a file system, and may be stored in a part of a file that stores another program or data, for example, stored in one or more scripts in a Hypertext Markup Language (HTML) document, stored in a single file dedicated to a program under discussion, or stored in a plurality of synchronous files (for example, a file that stores one or more modules, subprograms, or code parts). As an example, the executable instruction may be deployed on one electronic device for execution, or executed on multiple electronic devices located at one location, or executed on multiple electronic devices distributed at multiple locations and interconnected by using a communications network.

The foregoing descriptions are merely embodiments of the present disclosure and are not intended to limit the protection scope of the present disclosure. Any modification, equivalent replacement, or improvement made within the spirit and principle of the present disclosure shall fall within the protection scope of the present disclosure.

**Claims**

1. A video decoding method, executable by an electronic device and comprising:

    performing video stream analysis on a to-be-decoded video to obtain a frame data packet of each of a plurality of video frames of the to-be-decoded video, wherein the video stream analysis comprises parsing an encapsulated data packet in which video frame information of the to-be-decoded video is encapsulated;
    determining a frame type of each of the plurality of video frames based on frame attribute information from the frame data packet of the respective one video frame, the frame type comprising one of a key frame and a non-key frame;
    determining multiple target sampling frames from the to-be-decoded video based on a quantity of key frames;
    obtaining rendering data for rendering the to-be-decoded video stored in frame buffers each corresponding to a respective one of the multiple target sampling frames; and
    performing video decoding on the to-be-decoded video based on the rendering data to obtain a decoded video for the to-be-decoded video.

2. The method according to claim 1, wherein the determining multiple target sampling frames from the to-be-decoded video based on a quantity of key frames comprises:

    setting a quantity of target sampling frames; and
    determining that the target sampling frames are entirely composed of the key frames based on the quantity of key frames and the quantity of target sampling frames; or determining that the target sampling frames are composed of all of the key frames and some non-key frames based on the quantity of key frames and the quantity of target sampling frames.

3. The method according to claim 2, wherein the setting a quantity of target sampling frames comprises:

   determining an application scenario type of the decoded video, and
   setting the quantity of target sampling frames based on the application scenario type; or setting the quantity of target sampling frames based on video duration of the to-be-decoded video.

4. The method according to claim 2 or 3, wherein the determining that the target sampling frames are entirely composed of the key frames based on the quantity of key frames and the quantity of target sampling frames comprises:

   determining a first frame sampling step for the key frames in response to the quantity of key frames being greater than the quantity of target sampling frames;
   determining target sampling frames of the quantity from the key frames based on the first frame sampling step; and
   determining all key frames as the target sampling frames in response to the quantity of key frames being equal to the quantity of target sampling frames.

5. The method according to claim 4, wherein the determining a first frame sampling step for the key frames comprises:

   determining a first ratio between the quantity of key frames and the quantity of target sampling frames; and
   rounding the first ratio to obtain the first frame sampling step.

6. The method according to any one of claims 2 to 4, wherein the determining target sampling frames from all key frames and some non-key frames based on the quantity of key frames and the quantity of target sampling frames comprises:

   determining a second frame sampling step for the non-key frames in response to the quantity of key frames being less than the quantity of target sampling frames;
   determining a difference between the quantity of target sampling frames and the quantity of key frames as a non-key frame sampling quantity;
determining all key frames as the target sampling frames; and
determining target sampling frames of the non-key frame sampling quantity from the non-key frames based on the second frame sampling step.

7. The method according to claim 6, wherein the non-key frames comprise forward difference frames and bi-directional difference frames, and the method further comprises: deleting the bi-directional difference frames from a video frame sequence corresponding to the to-be-decoded video; and
the determining target sampling frames of the non-key frame sampling quantity from the non-key frames based on the second frame sampling step comprises:
determining the target sampling frames of the non-key frame sampling quantity from the forward difference frames based on the second frame sampling step.

8. The method according to claim 7, wherein the determining a second frame sampling step for the non-key frames comprises:

   obtaining a quantity of forward difference frames;
   determining a second ratio between the quantity of forward difference frames and the non-key frame sampling quantity; and
   rounding the second ratio to obtain the second frame sampling step.

9. The method according to any one of claims 1 to 8, wherein the determining a frame type of each video frame based on frame attribute information in the frame data packet comprises:

   obtaining the frame attribute information in the frame data packet; and
   parsing the frame attribute information to obtain a frame type of the video frame corresponding to the frame data packet, wherein the frame type of the video frame is contained in the frame attribute information.

10. The method according to any one of claims 1 to 9, wherein the determining multiple target sampling frames from the to-be-decoded video based on a quantity of key frames comprises:

    determining a video frame sequence composed of the key frames and the non-key frames;
    obtaining a frame index sequence of the video frame sequence;
    determining the target sampling frames from the video frame sequence based on the quantity of key frames; and

determining a frame index of each of the target sampling frames based on the frame index sequence.

11. The method according to any one of claims 1 to 10, further comprising:

obtaining the frame buffer of each of the target sampling frames from a frame buffer sequence of the to-be-decoded video based on the frame index of each of the target sampling frames.

12. The method according to claim 10 or 11, wherein the performing video decoding on the to-be-decoded video based on the rendering data to obtain a decoded video for the to-be-decoded video comprises:

performing image rendering on the target sampling frames based on the rendering data of the target sampling frames, to obtain a first type of color-coded images of each of the target sampling frames;

performing image transcoding processing on the first type of color-coded images to obtain a second type of color-coded images; and

determining the decoded video based on a second type of color-coded images of each of the target sampling frames.

13. A video decoding device, comprising:

a video stream analysis module configured to perform video stream analysis on a to-be-decoded video to obtain a frame data packet of each of a plurality of video frames of the to-be-decoded video, wherein the video stream analysis comprises parsing an encapsulated data packet in which video frame information of the to-be-decoded video is encapsulated;

a first determining module configured to determine a frame type of each of the plurality of video frames based on frame attribute information from the frame data packet of the respective one video frame, the frame type comprising one of a key frame and a non-key frame;

a second determining module configured to: determine multiple target sampling frames from the to-be-decoded video based on a quantity of key frames;

an obtaining module configured to obtain rendering data for rendering the to-be-decoded video stored in the frame buffers each corresponding to a respective one of the multiple target sampling frames; and

a video decoding module, configured to perform video decoding on the to-be-decoded video based on the rendering data to obtain a decoded video for the to-be-decoded video.

14. An electronic device, comprising:
a memory, configured to store executable instructions; and a processor, configured to implement the video decoding method according to any one of claims 1 to 12 when executing the executable instructions stored in the memory.

15. A computer-readable storage medium, having executable instructions stored therein, configured to: when a processor executes the executable instructions, implement the video decoding method according to any one of claims 1 to 12.

FIG. 1

FIG. 2

Uniform frame
capture
Time used: 1.5s

Similar frames

Missed

De-redundancy

Frame whose picture changes greatly

Embodiments of
this application
Time used: 0.3s

FIG. 3

10

Network 200

Decoded video

Video decoding request

Video decoding request

Decoded video

100

Server 300

FIG. 4

Electronic device

Memory 350

Operating system 351

Network interface 320

Network communication module 352

Processor 310

Input processing module 353

340

Video decoding apparatus 354

User interface 330

Video stream analysis module 3541

First determining module 3542

Output apparatus 331

Second determining module 3543

Obtaining module 3544

Input apparatus 332

Video decoding module 3545

FIG. 5

S101
Perform video stream analysis on a to-be-decoded video to obtain a frame data packet of each video frame in the to-be-decoded video

S102
Determine a frame type of each video frame based on frame attribute information in the frame data packet

S103
Determine multiple target sampling frames from the to-be-decoded video based on a quantity of key frames

S104
Obtain corresponding rendering data from a frame buffer of each of the target sampling frames

S105
Perform video decoding on the to-be-decoded video based on the rendering data to obtain a decoded video corresponding to the to-be-decoded video

FIG. 6

| Terminal | | Server |
|---|---|---|

**S201: Obtain a to-be-decoded video**

S202: Encapsulate the to-be-decoded video into a video decoding request

S203: Send the video decoding request

**S204: Perform video stream analysis on the to-be-decoded video in response to the video decoding request, to obtain a frame data packet of each video frame in the to-be-decoded video**

**S205: Determine a frame type of each video frame based on frame attribute information in the frame data packet, the frame type including a key frame and a non-key frame**

**S206: Determine target sampling frames from key frames and non-key frames based on a quantity of key frames, a quantity of target sampling frames being less than a total quantity of video frames in the to-be-decoded video**

S207: Obtain corresponding rendering data from a frame buffer of each of the target sampling frames

**S208: Perform video decoding on the to-be-decoded video based on the rendering data of the target sampling frames, to obtain a decoded video corresponding to the to-be-decoded video**

S209: Send the decoded video

**S210: Display the decoded video on a current interface**

**S211: Generate a video recognition request for the to-be-decoded video**

S212: Send a video recognition request

**S213: Perform recognition on the decoded video in response to the video recognition request to obtain a video recognition result**

**S214: Send the video recognition result to the terminal**

FIG. 7

Determine target sampling frames from key frames and non-key frames based on a quantity of key frames, a quantity of target sampling frames being less than a total quantity of video frames in the to-be-decoded video — S206

Set a quantity of target sampling frames — S2061

S2062 — Determine target sampling frames that all come from the key frames based on the quantity of key frames and the quantity of target sampling frames

Determine target sampling frames from all key frames and some non-key frames based on the quantity of key frames and the quantity of target sampling frames — S2063

FIG. 8

S2062

Determine target sampling frames that all come from the key frames based on the quantity of key frames and the quantity of target sampling frames

S2062a

Determine a first frame sampling step for the key frames in response to the quantity of key frames being greater than the quantity of target sampling frames

S2062c

Determine all key frames as the target sampling frames in response to the quantity of key frames being equal to the quantity of target sampling frames

S2062b

Determine target sampling frames having the quantity from the key frames based on the first frame sampling step

## FIG. 9

S2063

Determine target sampling frames from all key frames and some non-key frames based on the quantity of key frames and the quantity of target sampling frames

S2063a

Determine a second frame sampling step for the non-key frames in response to the quantity of key frames being less than the quantity of target sampling frames

S2063b

Determine a difference between the quantity of target sampling frames and the quantity of key frames as a non-key frame sampling quantity

S2063c

Determine all key frames as the target sampling frames

S2063d

Determine target sampling frames having the non-key frame sampling quantity from the non-key frames based on the second frame sampling step

## FIG. 10

S208

Perform video decoding on the to-be-decoded video based on the rendering data of the target sampling frames, to obtain a decoded video corresponding to the to-be-decoded video

S2081

Perform image rendering on the target sampling frames based on the rendering data of the target sampling frames, to obtain a first-type color-coded image of each of the target sampling frames

S2082

Perform image transcoding processing on the first-type color-coded image to obtain a second-type color-coded image

S2083

Determine the decoded video based on a second-type color-coded image of each of the target sampling frames

## FIG. 11

Input video
1201 → Frame type analysis 1202 → Buffer decoding 1203 → Frame sampling 1204 → Video decoding 1205

## FIG. 12

Assuming a required quantity of frames as k=25

GOP                                    GOP

| I | B | B | P | B | B | B | B | P | B | B | P | o o o | I | B | B | P | B | B | B | B | P | B | B | P |

Decoding sequence   1  3  4  2   6  7  8  9  5  11 12 10

Skip B frames

| I | P | P | P |    o o o o o o    | I | P | P | P |

The required quantity of frames is greater than a quantity of video I frames

(a)

The required quantity of frames is less than the quantity of video I frames

Reserve all I frames: | I | I | I | I | I | I | I | I | I |   Assuming 9 frames
                        1  2  3  4  5  6  7  8  9

Generate P frame index through sampling ⟹ [1,8,17,26,34,42,52,66,75,89,96,107,119,130,142,155]

GOP   GOP   GOP   GOP   GOP   GOP   GOP   GOP GOP

Extract video frames: | I | P | P | I | P | P | I | P | P | I | P | P | I | P | P | I | P | P | I | P | P | I | P | P | I |
                        1  2  3  4  5  6  7  8  9  10 11 12 13 14 15 16 17 18 19 20 21 22 23 24 25

(b)

Reserve all I frames: | I | I | I | I | I | I | I | I | I | I | I | I | I | I | I | I | I | I | I | I | I | I | I | I | I | I | I | I | I | I | I | I | I | I | I | I |
1 2 3 4 5 6 7 8 9 10 11 12 13 14 15 16 17 18 19 20 21 22 23 24 25 26 27 28 29 30 31 32 33 34 35 36

Assuming 36 frames

Generate indexes through sampling ⟹ [1,3,4,6,7,8,10,11,13,14,16,17,19,20,21,23,24,26,27,29,30,31,33,34,36]

Extract video frames: | I | I | I | I | I | I | I | I | I | I | I | I | I | I | I | I | I | I | I | I | I | I | I | I | I |
1 2 3 4 5 6 7 8 9 10 11 12 13 14 15 16 17 18 19 20 21 22 23 24 25

(c)

## FIG. 13

Video decoding →

Key frame extraction

→ Video content description model → "A woman is viewing the scenery" "Photograph a building" "A woman stands by the building"

→ Video classification model → Life - Life record - Life on-camera

## FIG. 14

## INTERNATIONAL SEARCH REPORT

International application No.

**PCT/CN2023/135898**

### A. CLASSIFICATION OF SUBJECT MATTER

H04N19/44(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; ENTXT; ENTXTC; CJFD; CNKI: 解码, 关键帧, I帧, 非关键帧, P帧, B帧, 采样, 抽样, 个数, 数量, 数目, 缓存, 仅, 只, 步长, 比值, decod+, key, frame, I, B, P, sampl+, number, quantity, amount+, buffer, cache, only, step, ratio

### C. DOCUMENTS CONSIDERED TO BE RELEVANT

| Category* | Citation of document, with indication, where appropriate, of the relevant passages | Relevant to claim No. |
|---|---|---|
| PX | CN 116962714 A (TENCENT TECHNOLOGY (SHENZHEN) CO., LTD.) 27 October 2023 (2023-10-27) <br> claims 1-14, and description, paragraphs [0036]-[0197] | 1-16 |
| X | CN 111669599 A (OPPO GUANGDONG MOBILE TELECOMMUNICATIONS CORP., LTD.) 15 September 2020 (2020-09-15) <br> description, paragraphs [0027]-[0068] and [0099]-[0107], and figures 1-4 | 1-3, 9-16 |
| A | CN 109120995 A (WUHAN DOUYU NETWORK TECHNOLOGY CO., LTD.) 01 January 2019 (2019-01-01) <br> entire document | 1-16 |
| A | CN 112822516 A (PEKING UNIVERSITY) 18 May 2021 (2021-05-18) <br> entire document | 1-16 |
| A | US 2016277734 A1 (HUAWEI TECHNOLOGIES CO., LTD.) 22 September 2016 (2016-09-22) <br> entire document | 1-16 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 February 2024** | **21 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/135898** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022254069 A1 (TENCENT TECHNOLOGY (SHENZHEN) CO., LTD.) 11 August 2022 (2022-08-11) <br> entire document | 1-16 |

Form PCT/ISA/210 (second sheet) (July 2022)

**INTERNATIONAL SEARCH REPORT**
Information on patent family members

International application No.

**PCT/CN2023/135898**

| Patent document cited in search report | | | Publication date (day/month/year) | Patent family member(s) | | | Publication date (day/month/year) |
|---|---|---|---|---|---|---|---|
| CN | 116962714 | A | 27 October 2023 | None | | | |
| CN | 111669599 | A | 15 September 2020 | None | | | |
| CN | 109120995 | A | 01 January 2019 | CN | 109120995 | B | 01 January 2021 |
| CN | 112822516 | A | 18 May 2021 | CN | 112822516 | B | 26 July 2022 |
| US | 2016277734 | A1 | 22 September 2016 | EP | 3070947 | A1 | 21 September 2016 |
| | | | | EP | 3070947 | B1 | 25 November 2020 |
| | | | | US | 10708581 | B2 | 07 July 2020 |
| | | | | CN | 104703027 | A | 10 June 2015 |
| | | | | CN | 104703027 | B | 27 March 2018 |
| US | 2022254069 | A1 | 11 August 2022 | WO | 2022001469 | A1 | 06 January 2022 |
| | | | | EP | 4044608 | A1 | 17 August 2022 |
| | | | | EP | 4044608 | A4 | 04 January 2023 |
| | | | | JP | 2023517003 | A | 21 April 2023 |
| | | | | CN | 111901666 | A | 06 November 2020 |
| | | | | CN | 111901666 | B | 11 May 2021 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310074826